(19) Europäisches Patentamt
European Patent Office
Office européen des brevets

(11) **EP 4 181 426 A1**

(12) **EUROPEAN PATENT APPLICATION**
published in accordance with Art. 153(4) EPC

(43) Date of publication:
**17.05.2023 Bulletin 2023/20**

(21) Application number: **21857461.4**

(22) Date of filing: **26.07.2021**

(51) International Patent Classification (IPC):
**H04B 10/079** (2013.01)

(52) Cooperative Patent Classification (CPC):
**H04B 7/0413; H04B 10/079; H04B 17/309; H04J 14/02**

(86) International application number:
**PCT/CN2021/108435**

(87) International publication number:
**WO 2022/037366 (24.02.2022 Gazette 2022/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.08.2020 CN 202010848926**

(71) Applicant: **ZTE Corporation**
**Shenzhen, Guangdong 518057 (CN)**

(72) Inventor: **LIANG, Junpeng**
**Shenzhen, Guangdong 518057 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **CHARACTERISTIC PARAMETER MONITORING METHOD AND APPARATUS FOR SPACE DIVISION MULTIPLEXING OPTICAL FIBER, AND DEVICE AND STORAGE MEDIUM**

(57) Disclosed are a method and an apparatus for monitoring characteristic parameters of a space division multiplexing fiber, and a device and a storage medium. The embodiment of the present application obtains a time domain coefficient of each sub-filter of a multi-input multi-output equalizer called a MIMO equalizer; obtains a frequency response of each sub-filter according to the time domain coefficient of each sub-filter, to obtain a frequency response matrix of the MIMO equalizer; and obtains characteristic parameters of the space division multiplexing fiber of each spatial channel according to the frequency response matrix.

FIG. 1

EP 4 181 426 A1

**Description**

**CROSS-REFERENCE TO RELATED APPLICATIONS**

This application claims priority to Chinese Patent Application No. 202010848926.1, filed on August 21, 2020, the entire contents of which are incorporated herein by reference.

**TECHNICAL FIELD**

Embodiments of the present application relate to the field of fiber optic communication, and in particular to a method and an apparatus for monitoring characteristic parameters of a space division multiplexing fiber, and a device and a storage medium.

**BACKGROUND**

Applicant found that environmental changes, such as temperature and stress, can lead to dynamic changes in the characteristic parameters, and the characteristic parameter measurement method in the related technology can only predict characteristic parameters, but cannot track the environmental changes and monitor the characteristic parameters in real time with the service. In addition, the characteristic parameter measurement method in the related technology cannot measure the characteristic parameters of dynamic links, and cannot depict the overall characteristics of multi-span fiber links, and cannot exclude the interference of other modes when measuring parameters. Since the data source is inaccurate, thus the measured parameters are inaccurate.

**SUMMARY**

Embodiments of the present application provide a method for monitoring characteristic parameters of a space division multiplexing fiber, including: obtaining a time domain coefficient of each sub-filter of a multi-input multi-output equalizer called a MIMO equalizer; obtaining a frequency response of each sub-filter according to the time domain coefficient of each sub-filter, to obtain a frequency response matrix of the MIMO equalizer; and obtaining characteristic parameters of the space division multiplexing fiber of each spatial channel according to the frequency response matrix.

Embodiments of the present application further provide an apparatus for monitoring characteristic parameters of a space division multiplexing fiber, including: a time domain coefficient acquisition module for obtaining a time domain coefficient of each sub-filter of a multi-input multi-output equalizer called a MIMO equalizer; a conversion module for obtaining a frequency response of each sub-filter according to the time domain coefficient of each sub-filter, to obtain a frequency response matrix of the MIMO equalizer; and a characteristic parameter acquisition module for obtaining characteristic parameters of the space division multiplexing fiber of each spatial channel according to the frequency response matrix.

Embodiments of the present application further provide an electronic device, including: at least one processor; and a memory communicated with the at least one processor; the memory stores instructions executable by the at least one processor, the instructions are executed by the at least one processor to enable the at least one processor to perform the method of monitoring characteristic parameters of the space division multiplexing fiber described above.

Embodiments of the present application further provide a computer-readable storage medium storing a computer program that when executed by a processor causes the processor to perform the method for monitoring characteristic parameters of the space division multiplexing fiber described above.

**BRIEF DESCRIPTION OF THE DRAWINGS**

FIG. 1 is a flowchart of a method for monitoring characteristic parameters of a space division multiplexing fiber according to a first embodiment of the present application.

FIG. 2 is a structural diagram of a 6x6 MIMO equalizer according to the first embodiment of the present application.

FIG. 3 is a flowchart of a method for monitoring characteristic parameters of a space division multiplexing fiber according to a second embodiment of the present application.

FIG. 4 is a flowchart of a method for monitoring characteristic parameters of a space division multiplexing fiber according to a third embodiment of the present application.

FIG. 5 is a flowchart of a method for monitoring characteristic parameters of a space division multiplexing fiber according to a fourth embodiment of the present application.

FIG. 6 is a schematic diagram of extracting characteristic parameters of a space division multiplexing fiber according to the fourth embodiment of the present application.

FIG. 7 is a cross-sectional structural diagram of a three-core fiber according to the fourth embodiment of the present application.

FIG. 8 is a schematic structural diagram of an apparatus for monitoring characteristic parameters of a space division multiplexing fiber according to a fifth embodiment of the present application.

FIG. 9 is a schematic structural diagram of an electronic device according to a sixth embodiment of the present application.

## DETAILED DESCRIPTION OF THE EMBODIMENTS

In order to make the purpose, technical solutions and advantages of the embodiments of the present application clearer, each embodiment of the present application will be described in detail below in conjunction with the accompanying drawings. However, it will be understood by those skilled in the art that in each embodiment of the present application, many technical details are presented to enable the reader to better understand the present application. However, even without these technical details and various variations and modifications according to each of the following embodiments, the technical solution protected by the present application can be realized. The following embodiments are divided for the convenience of description and shall not constitute any limitation to the specific manner of implementation of the present application, and each embodiment may be combined and referenced to each other without contradiction.

With the increase of communication capacity and the depletion of resources such as polarization, orthogonal dimension, frequency resources and electronic bottlenecks, the space division multiplexing technology based on special fibers such as few-mode fibers, multi-core fibers and few-mode multi-core fibers gets more and more attention. The differential group delay parameters, mode-dependent loss parameters and mode-dependent chromatic dispersion parameters between different modes of multi-core fibers or few-mode fibers are important parameters specific to a space division multiplexing system. Currently, the characteristic parameters in space division multiplexing fiber are mainly monitored by spectral interferometry and backward scattering methods.

However, the Applicant found that environmental changes, such as temperature and stress, can lead to dynamic changes in the characteristic parameters, and the characteristic parameter measurement method in the related technology can only predict characteristic parameters, but cannot track the environmental changes and monitor the characteristic parameters in real time with the service. In addition, the characteristic parameter measurement method in the related technology cannot measure the characteristic parameters of dynamic links, and cannot depict the overall characteristics of multi-span fiber links, and cannot exclude the interference of other modes when measuring parameters. Since the data source is inaccurate, thus the measured parameters are inaccurate.

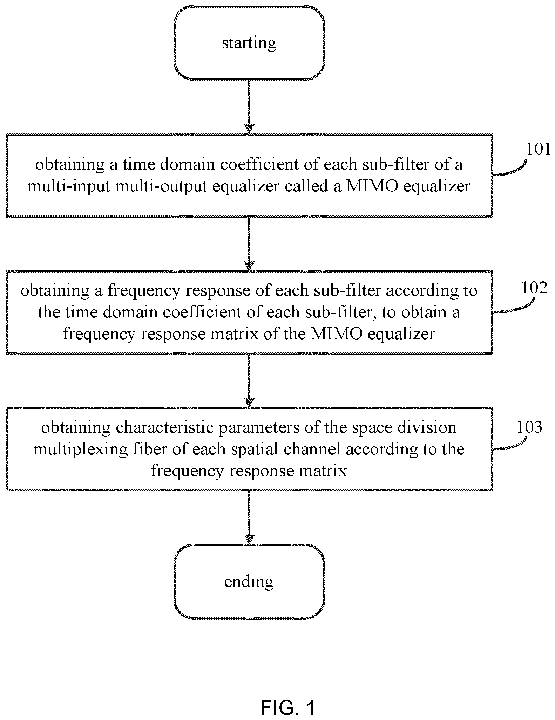

The first embodiment of the present application relates to a method for monitoring characteristic parameters of a space division multiplexing fiber, as shown in FIG. 1, including:
operation S101: obtaining a time domain coefficient of each sub-filter of a multi-input multi-output equalizer called a MIMO equalizer.

The time domain coefficient of each sub-filter in the MIMO equalizer are obtained by, for example, a constant modulus algorithm (CMA), a minimum mean square error algorithm (LMS), a recursive least square (RLS) or training sequences.

Operation S102: obtaining a frequency response of each sub-filter according to the time domain coefficient of each sub-filter, to obtain a frequency response matrix of the MIMO equalizer.

The time domain coefficient of the sub-filter with j inputs and i outputs is $W_{ij}(n)(i, j = 1,2,.M)$, where n is the identifier of the filter tap $n = 1,2,...N$, N is the number of filter taps, and M is the number of spatial channels. The frequency response $W_{ij}(n)$ of each sub-filter is obtained by the Fourier transform, and the overall frequency response of the MIMO filter is $W(f)$, i.e., the frequency response matrix $W(f)$ of the MIMO equalizer.

Operation S103: obtaining characteristic parameters of the space division multiplexing fiber of each spatial channel according to the frequency response matrix.

The frequency response matrix $W(f)$ of the MIMO equalizer is used to calculate the characteristic parameters of the space division multiplexing fiber of each spatial channel.

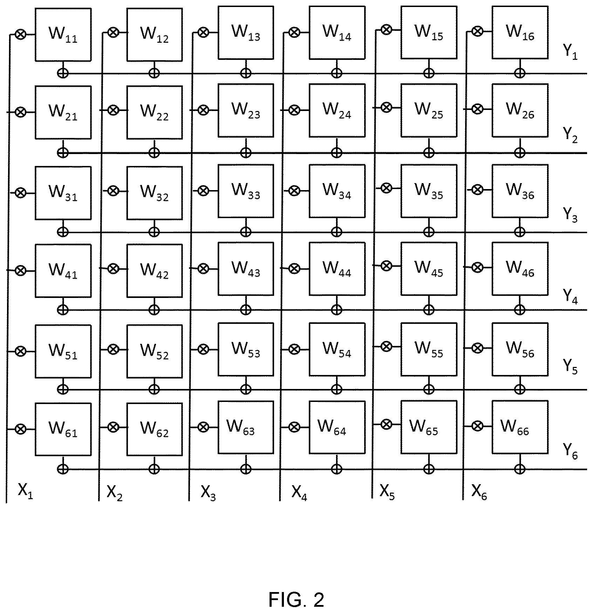

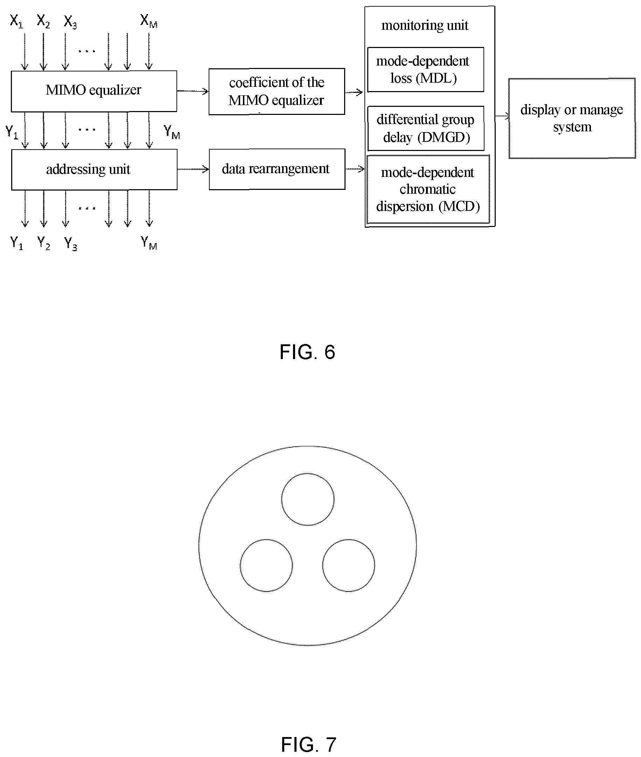

A strong coupling system based on the few-mode fiber is taken as an example. Assuming that the number of modes supported by the few-mode fiber is 6, which corresponds to LP01, LP11a, LP11b and two polarizations corresponding to each line polarization mode. As shown in FIG. 2, 6 data, such as the LP01x, LP01y, LP11ax, LP11ay, LP11bx, LP11by, and LP11by are X1, X2, .... X6, and outputs of the MIMO equalizer are Y1, Y2,...Y6. The time domain coefficient of the taps of MIMO equalizer, i.e., the time domain coefficient of the sub-filter is $W_{ij}(n)$, where $i, j \in \{1,2,3,4,5,6\}$ represents the coefficient of the sub-filter with j inputs and i outputs, $n \in \{1,2,....N\}$ is the identifier of the filter tap, and N is the number of taps. The time domain coefficient of the sub-filter is Fourier transformed to obtain the frequency response of each sub-filter, and the overall frequency response of the entire MIMO equalizer is $W(f)$, that is, the frequency response matrix of the MIMO equalizer is $W(f)$; the frequency response matrix $W(f)$ is used to calculate the characteristic parameters of the space division multiplexing fiber.

The first embodiment of the present application obtains the time domain coefficient of each sub-filter of the MIMO equalizer, obtains the frequency response of each sub-filter according to the time domain coefficient of each sub-filter, obtains the frequency response matrix of the MIMO equalizer, and obtains the characteristics parameters of the space division multiplexing fiber of each spatial channel according to the frequency response matrix. The embodiment of the present application obtains the time domain coefficient of the sub-filter from the MIMO equalizer to calculate the characteristic parameters of the space division multiplexing fiber, which can track the environmental changes, monitor the characteristic parameters of the space division multiplexing fiber in real time, measure the dynamic link in real time, and depict the overall characteristics of the multi-span fiber links, and the embodiment of the present application obtains the coefficient of the MIMO equalizer, such that the data source is accurate, and the interference from other modes can discharged, the obtained characteristic parameters are more accurate.

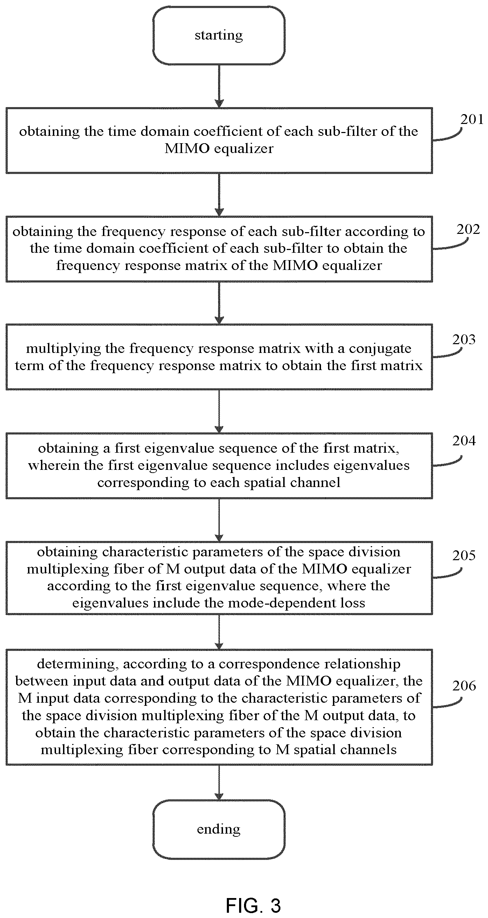

The second embodiment of the present application relates to a method for monitoring the characteristic parameters of the space division multiplexing fiber, and the second embodiment is substantially the same as the first embodiment, with the difference that in the embodiment, the characteristic parameters of the space division multiplexing fiber specifically include a mode-dependent loss, and the specific flow of the embodiment is shown in FIG. 3, including:

operation S201: obtaining the time domain coefficient of each sub-filter of the MIMO equalizer.

operation S202: obtaining the frequency response of each sub-filter according to the time domain coefficient of each sub-filter to obtain the frequency response matrix of the MIMO equalizer.

Operation S201 and operation S202 are the same as operation S101 and operation S102 in the first embodiment, which are not repeated here.

Operation S203: multiplying the frequency response matrix with a conjugate term of the frequency response matrix to obtain the first matrix.

The conjugate term $W^*(f) = conj(W(f))$ of the $W(f)$ is multiplied with $W(f)$ to obtain the first matrix $T(f) = W^*(f)W(f)$.

Operation S204: obtaining a first eigenvalue sequence of the first matrix, wherein the first eigenvalue sequence includes eigenvalues corresponding to each spatial channel.

The first eigenvalue sequence $\lambda_i (i = 1,2,..M)$ of the first matrix $T(f)$ is obtained, i.e., the eigenvalue sequence $\lambda_1, \lambda_2, ..., \lambda_M$ of $T(f)$.

Operation S205: obtaining characteristic parameters of the space division multiplexing fiber of M output data of the MIMO equalizer according to the first eigenvalue sequence, where the eigenvalues include the mode-dependent loss.

The $\lambda_k$ corresponds to the kth spatial channel, $\lambda_j$ corresponds to the jth spatial channel in the first eigenvalue sequence, and the mode-dependent loss of the kth spatial channel relative to the jth spatial channel is obtained according to a ratio of the eigenvalue corresponding to the kth spatial channel to the eigenvalue corresponding to the jth spatial channel.

In an embodiment, the mode-dependent loss of the kth spatial channel relative to the jth spatial channel is obtained by the following equation, to obtain the mode-dependent loss of each spatial channel.

$$ MDL_{kj} = \left| 10 \log_{10} \left( \frac{\lambda_k}{\lambda_j} \right) \right|, (k, j = 1,2,..M, j \neq k) $$

.

Operation S206: determining, according to a correspondence relationship between input data and output data of the MIMO equalizer, the M input data corresponding to the characteristic parameters of the space division multiplexing fiber of the M output data, to obtain the characteristic parameters of the space division multiplexing fiber corresponding to M spatial channels.

The output sequence in MIMO is Y1, Y2, ..., YM, the input sequence is X1, X2, ..., XM, and the training sequences are inserted at the front end of the transmitted M streams d1, d2, ... , dM; the equalized recovered output sequence Y1, Y2, ..., YM, after the frequency offset and carrier phase recovery, become the M data streams $\hat{y}_1, \hat{y}_2, \hat{y}_M$, and the correlation between the M streams $\hat{y}_1, \hat{y}_2, \hat{y}_M$ and the training sequences d1, d2, ..., dM are calculated. Assuming that the recovered signal at the receiver is $\hat{y}_i$, then the maximum value is selected from $corr(\hat{y}_i d_j)(j = 1,2,3,..M)$, that is, the i-th output data actually corresponds to the j-th input data in practice.

A strong coupling system based on the few-mode fiber is taken as an example. Assuming that the number of modes supported by the few-mode fiber is 6, which corresponds to LP01, LP11a, LP11b and two polarizations corresponding to each line polarization mode. As shown in FIG. 2, 6 data, such as the LP01x, LP01y, LP11ax, LP11ay, LP11bx, LP11by, and LP11by are X1, X2, .... X6, and outputs of the MIMO equalizer are Y1, Y2,...Y6. The time domain coefficient of the sub-filter of MIMO is $W_{ij}(n)$, where $i, j \in \{1,2,3,4,5,6\}$ represents the time domain coefficient of the sub-filter with j inputs and i outputs, $n \in \{1,2,....N\}$ is the identifier of the filter tap, and N is the number of taps. The time domain coefficient of the sub-filter is Fourier transformed to obtain the frequency response matrix $W_{ij}(f)$ of each sub-filter, and the overall frequency response of the entire MIMO equalizer is $W(f)$. $W(f)$ is multiplied with a conjugate term $W^*(f) = conj(W(f))$ of $W(f)$ to obtain a matrix $T(f)=W^*(f)W(f)$, the first eigenvalue $\lambda_i(i = 1,2,...6)$ of $T(f)$ is obtained. The mode j is selected for reference, and the mode-dependent loss of each mode can be:

$$MDL_{kj} = \left| 10\log_{10}\left(\frac{\lambda_k}{\lambda_j}\right) \right|, (k, j = 1,2,...6, j \neq k)$$

.

A training sequence is inserted at the front end of the transmitted 6 data streams d1, d2, ...., d6, the equalized recovered output sequences Y1, Y2, ...Y6, after the frequency offset and carrier phase recovery, become the 6 data streams $\hat{y}_1, \hat{y}_2....\hat{y}_M$, and the correlation between the 6 data streams $\hat{y}_1, \hat{y}_2....\hat{y}_M$ and the training sequences d1, d2, ..., dM is obtained. Assuming that the recovered signal at the receiver is $\hat{y}_i$, then the correlation coefficient, i.e., the maximum value in the $corr(\hat{y}_i d_j)(j = 1,2,3,..6)$, is selected, which means that the i output data actually corresponds to the j input data. For example, if the first output data actually corresponds to the third input data, and the second output data actually corresponds to the fourth input data, then the mode-dependent loss of the first spatial channel relative to the second spatial channel calculated by the formula, is actually the mode-dependent loss of the third spatial channel relative to the fourth spatial channel.

Compared to relying on the backscatter method to predict mode-dependent loss by optical time domain reflectometer (OTDR), the embodiment of the present application uses the time domain coefficient of the MIMO equalizer to calculate the mode-dependent loss, which can monitor the mode-dependent loss in real time and depict the overall characteristics of the multi-span fiber links, and a correspondence relationship between the output sequences Y1, Y2,..., YM and the input sequences X1, X2, ..., XM can be obtained, such that the problem of switching between output sequences of the blind equalizer can be avoided, and the accuracy of mode-dependent loss is ensured.

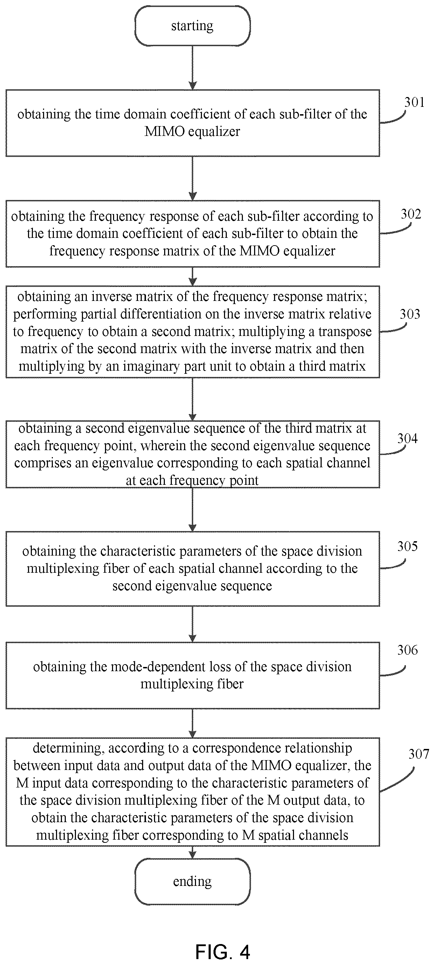

The third embodiment of the present application relates to a method for monitoring characteristic parameters of a space division multiplexing fiber, and the third embodiment is substantially the same as the second embodiment, with the difference that in the embodiment, the characteristic parameters of the space division multiplexing fiber also include the differential group delay, and the specific flow of the embodiment is shown in FIG. 4, including:

operation S301: obtaining the time domain coefficient of each sub-filter of the MIMO equalizer.

operation S302: obtaining the frequency response of each sub-filter according to the time domain coefficient of each sub-filter to obtain the frequency response matrix of the MIMO equalizer.

The operation S301 and operation S302 are the same as operation S101 and operation S102 in the first embodiment, which are not repeated here.

Operation S303: obtaining an inverse matrix of the frequency response matrix; performing partial differentiation on the inverse matrix relative to frequency to obtain a second matrix; multiplying a transpose matrix of the second matrix with the inverse matrix and then multiplying by an imaginary part unit to obtain a third matrix.

The inverse matrix $W^{-1}(f)$ of the frequency response matrix $W(f)$ obtained in operation S301 is obtained; it is performed partial differentiation on the inverse matrix $W^{-1}(f)$ obtained relative to frequency $f$ to obtain the second matrix $\frac{\partial W^{-1}(f)}{\partial f}$ ; the transpose of the second matrix $\frac{\partial W^{-1}(f)}{\partial f}$ is obtained, and then multiplied with the frequency filter matrix, and then multiplied by the imaginary part unit j to obtain the third matrix:

$$M(f) = \frac{j}{2\pi} W^{-1}(f) \left[ \frac{\partial W^{-1}(f)}{\partial f} \right]^{H}$$

.

Operation S304: obtaining a second eigenvalue sequence of the third matrix at each frequency point, wherein the second eigenvalue sequence comprises an eigenvalue corresponding to each spatial channel at each frequency point.

The second eigenvalue sequence $\chi_i$ ($i$=1,2,..$M$) of the third matrix at each frequency point $f$ is obtained, i.e., the second eigenvalue sequence includes: $\chi_1$, $\chi_2$, ..., $\chi_M$.

Operation S305: obtaining the characteristic parameters of the space division multiplexing fiber of each spatial channel according to the second eigenvalue sequence.

In an embodiment, taking the eigenvalue at the zero frequency point directly can obtain the differential group delay between the kth spatial channel relative to the jth spatial channel, i.e. the mode k relative to the mode j.

$$DMGD_{kj} = \chi_k \big|_{f=0} - \chi_j \big|_{f=0} \ (k, j = 1, 2, .. M, k \neq j)$$

.

In an embodiment, summing the eigenvalues at each frequency point to make the difference, the differential group delay between the modes is obtained as:

$$DMGD_{kj} = \sum_f \chi_k - \sum_f \chi_j \ (k, j = 1, 2, .. M, k \neq j)$$

,

where a spatial channel corresponds to a mode, e.g., the kth spatial channel corresponds to a mode k.

Operation S306: obtaining the mode-dependent loss of the space division multiplexing fiber.

Operation S306 is the same as the operations from operation S203 to operation S205 in the second embodiment to obtain the mode-dependent loss, which will not be repeated herein. In addition, the operations to obtain the differential group delay, i.e., operations S303 to S305, and the operations to obtain the mode-dependent loss in the embodiment are not limited, i.e., the differential group delay can be calculated first, or the mode-dependent loss can be calculated first, or both can be executed in parallel.

Operation S307, determining, according to a correspondence relationship between input data and output data of the MIMO equalizer, the M input data corresponding to the characteristic parameters of the space division multiplexing fiber of the M output data, to obtain the characteristic parameters of the space division multiplexing fiber corresponding to M spatial channels.

Operation S307 is the same as operation 206 in the second embodiment, which is not repeated here.

A strong coupling system based on the few-mode fiber is taken as an example. Assuming that the number of modes supported by the few-mode fiber is 6, which corresponds to LP01, LP11a, LP11b and two polarizations corresponding to each line polarization mode. As shown in FIG. 2, 6 data, such as the LP01x, LP01y, LP11ax, LP11ay, LP11 bx, LP11by, and LP11by is X1, X2, .... X6, and outputs of the MIMO equalizer are Y1, Y2,...Y6. The time domain coefficient of the sub-filter of MIMO is $W_{ij}(n)$, where $i, j \in \{1,2,3,4,5,6\}$ represents the time domain coefficient of the sub-filter with j inputs and i outputs, $n \in \{1,2,....N\}$ is the identifier of the filter tap, and N is the number of taps. The time domain coefficient $W_{ij}(n)$ of the sub-filter is Fourier transformed to obtain the frequency response matrix $W_{ij}(f)$ of each sub-filter, and the overall frequency response of the entire MIMO equalizer is $W(f)$. The inverse matrix $W^{-1}(f)$ of $W(f)$ is obtained.

It is performed the partial differentiation on the $W(f)$ relative to frequency $f$ to obtain a second matrix $\dfrac{\partial W^{-1}(f)}{\partial f}$ , the transpose of the second matrix is obtained, and multiplied with the inverse matrix $W^{-1}(f)$, and multiplying by the imaginary part unit j to obtain the third matrix: $M(f) = \dfrac{j}{2\pi} W^{-1}(f) \left[ \dfrac{\partial W^{-1}(f)}{\partial f} \right]^{H}$ , the eigenvalue sequence $\chi_i(f)$ of the third matrix is obtained, and the differential group delay can be estimated with two ways according to the third matrix eigenvalue sequence: taking the value at the zero frequency point of the eigenvalue directly can get the differential group delay between mode k relative to mode j as:

$$DMGD_{kj} = \chi_k\big|_{f=0} - \chi_j\big|_{f=0} \, (k, j = 1,2,...6, k \neq j)$$
;

or, the eigenvalues at each frequency point are summed to make the difference, the differential group delay between the modes is obtained as:

$$DMGD_{kj} = \sum_f \chi_k - \sum_f \chi_j \, (k, j = 1,2,...6, k \neq j)$$
.

The conjugate $W^*(f) = conj(W(f))$ of $W(f)$ is multiplied with $W(f)$ to obtain the matrix $T(f) = W^*(f)W(f)$; the first eigenvalue $\lambda_i (i = 1,2,...6)$ of $T(f)$ is obtained, and one of the modes j is chosen for reference, then the mode-dependent loss of each mode can be

$$MDL_{kj} = \left| 10\log_{10}(\frac{\lambda_k}{\lambda_j}) \right|, (k, j = 1,2,...6, j \neq k)$$
.

A training sequence is inserted at the front end of the transmitted 6 data streams d1, d2, ...., d6, the equalized recovered output sequences Y1, Y2, ...Y6, after the frequency offset and carrier phase recovery, become the 6 data streams $\hat{y}_1, \hat{y}_2....\hat{y}_M$, and the correlation between the 6 data streams $\hat{y}_1, \hat{y}_2....\hat{y}_M$ and the training sequences d1, d2, ..., dM is obtained. Assuming that the recovered signal at the receiver is $\hat{y}_i$, then the correlation coefficient, i.e., the maximum value in the $corr(\hat{y}_i d_j)(j = 1,2,3,..6)$, is selected, which means that the i output data actually corresponds to the j input data. For example, according to the correspondence relationship between the input data and output data of the MIMO equalizer, the 6 input data corresponding to the characteristic parameters of the space division multiplexing fiber characteristic parameters of the 6 output data is determined to obtain the characteristic parameters of the space division multiplexing fiber corresponding to the 6 spatial channels.

Compared to the method of spectral interference, the embodiment of the present application uses the time domain coefficient of the filters in the MIMO equalizer to calculate the differential group delay, such that the differential group delay can be measured in real time, the mode-dependent dispersion and the influence of other modes can be excluded, to improve the accuracy of the measurement.

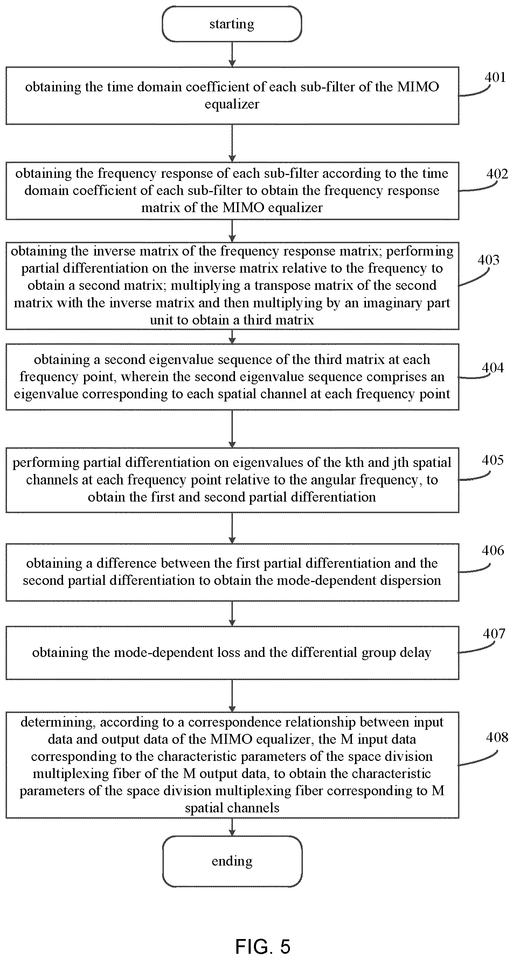

The fourth embodiment of the present application relates to a method for monitoring characteristic parameters of a space division multiplexing fiber, and the fourth embodiment is substantially the same as the third embodiment, with the difference that in the embodiment, the characteristic parameters of the space division multiplexing fiber also include the mode-dependent dispersion, and the specific flow of the embodiment is shown in FIG. 5, including the following operations.

Operation S401: obtaining the time domain coefficient of each sub-filter of the MIMO equalizer.

Operation S402: obtaining the frequency response of each sub-filter according to the time domain coefficient of each sub-filter to obtain the frequency response matrix of the MIMO equalizer.

Operation S403: obtaining the inverse matrix of the frequency response matrix; performing partial differentiation on the inverse matrix relative to the frequency to obtain a second matrix; multiplying a transpose matrix of the second matrix with the inverse matrix and then multiplying by an imaginary part unit to obtain a third matrix.

Operation S404: obtaining a second eigenvalue sequence of the third matrix at each frequency point, wherein the second eigenvalue sequence comprises an eigenvalue corresponding to each spatial channel at each frequency point.

Operations S401 to S404 are the same as operations S301 and S304 in the first embodiment, which are not repeated here.

Operation S405: performing partial differentiation on eigenvalues of the kth and jth spatial channels at each frequency point relative to the angular frequency, to obtain the first and second partial differentiation.

The first partial differentiation of the kth spatial channel at each frequency point is $\dfrac{\partial \chi_k}{\partial \omega}$, and the second

partial differentiation of the jth spatial channel at each frequency point is $\dfrac{\partial \chi_j}{\partial \omega}$, $\omega$ is the angular frequency.

Operation S406: obtaining a difference between the first partial differentiation and the second partial differentiation to obtain the mode-dependent dispersion.

The difference between the first partial differentiation and the second partial differentiation is

$$MCD_{kj} = \frac{\partial \chi_k}{\partial \omega} - \frac{\partial \chi_j}{\partial \omega}(k, j = 1,2,..M, k \neq j)$$

, and the difference $MCD_{kj}$ is the mode-dependent dispersion of the mode corresponding to the kth spatial channel relative to the mode corresponding to the jth spatial channel in the space division multiplexing fiber.

Operation S407: obtaining the mode-dependent loss and the differential group delay.

The operations for obtaining the mode-dependent loss and the differential group delay in operation S407 are the same as those in the third embodiment, which will not be repeated here.

Operation S408: determining, according to a correspondence relationship between input data and output data of the MIMO equalizer, the M input data corresponding to the characteristic parameters of the space division multiplexing fiber of the M output data, to obtain the characteristic parameters of the space division multiplexing fiber corresponding to M spatial channels.

A strong coupling system based on the few-mode fiber is taken as an example. Assuming that the number of modes supported by the few-mode fiber is 6, which corresponds to LP01, LP11a, LP11b and two polarizations corresponding to each line polarization mode. As shown in FIG. 2, 6 data, such as the LP01x, LP01y, LP11ax, LP11ay, LP11bx, LP11by, and LP11by are X1, X2, .... X6, and outputs of the MIMO equalizer are Y1, Y2,...Y6. The time domain coefficient of the sub-filter of MIMO is $W_{ij}(n)$, where $i, j \in \{1,2,3,4,5,6\}$ represents the time domain coefficient of the sub-filter with j inputs and i outputs, $n \in \{1,2,....N\}$ is the identifier of the filter tap, and N is the number of taps. The time domain coefficient $W_{ij}(n)$ of the sub-filter is Fourier transformed to obtain the frequency response matrix $W_{ij}(f)$ of each sub-filter, and the overall frequency response of the entire MIMO equalizer is $W(f)$. The inverse matrix $W^{-1}(f)$ of $W(f)$ is obtained. It is performed a partial differentiation on the $W(f)$ relative to frequency $f$ to obtain a second matrix $\dfrac{\partial W^{-1}(f)}{\partial f}$, the transpose of the second matrix is obtained, and multiplied with the inverse matrix $W^{-1}(f)$, and multiplying by the imaginary part unit j to obtain the third matrix:
$$M(f) = \frac{j}{2\pi} W^{-1}(f) \left[ \frac{\partial W^{-1}(f)}{\partial f} \right]^{H}$$
, the eigenvalue sequence $\chi_i(f)$ of the third matrix is obtained, and the differential group delay can be estimated with two ways according to the third matrix eigenvalue sequence: taking the value at the zero frequency point of the eigenvalue directly can get the differential group delay between the mode k relative to the mode j as:

$DMGD_{kj} = \chi_k|_{f=0} - \chi_j|_{f=0}(k, j = 1,2,...6, k \neq j)$; or, the eigenvalues at each frequency point are summed to make the difference,

$$DMGD_{kj} = \sum_f \chi_k - \sum_f \chi_j (k, j = 1,2,...6, k \neq j)$$

the differential group delay between the modes is obtained as:

; the conjugate $W^*(f) = conj(W(f))$ of $W(f)$ is multiplied with $W(f)$ to obtain the matrix $T(f) = W^*(f)W(f)$; the first eigenvalue $\lambda_i(i = 1,2,...6)$ of $T(f)$ is obtained, and one of the modes j is chosen for reference, then the mode-dependent loss of each mode can be
$$MDL_{kj} = \left| 10\log_{10}(\frac{\lambda_k}{\lambda_j}) \right|, (k, j = 1,2,...6, j \neq k)$$
. The slope of the $\chi_i(f)$ to the frequency $f$ is obtained, thus the mode-dependent dispersion $MCD_{kj}$ of the other modes relative to mode j can be obtained, which can be

$$MCD_{kj} = \frac{\partial \chi_k}{\partial \omega} - \frac{\partial \chi_j}{\partial \omega}(k, j = 1,2,..6, k \neq j)$$
. A training sequence is inserted at the front end of the transmitted 6 data streams d1, d2, ...., d6, the equalized recovered output sequences Y1, Y2, ...Y6, after the frequency offset and carrier phase recovery, become the 6 data streams $\hat{y}_1, \hat{y}_2....\hat{y}_M$, and the correlation between the 6 data streams $\hat{y}_1, \hat{y}_2....\hat{y}_M$ and the training sequences d1, d2, ..., dM is obtained. Assuming that the recovered signal at the receiver is $\hat{y}_i$, then the

correlation coefficient, i.e., the maximum value in the $corr(\hat{y}_i d_j)(j = 1,2,3,..6)$, is selected, which means that the i output data actually corresponds to the j input data

The method of monitoring characteristic parameters of the space division multiplexing fiber in the embodiment can be applied in the device shown in FIG. 6, the device includes a MIMO equalizer, an addressing unit, a monitoring unit, and a display system or system management unit. The monitoring unit includes a mode-dependent loss unit, a differential group delay monitoring unit, and a mode-dependent chromatic dispersion monitoring unit. The MIMO equalizer is mainly used to decouple the mode and polarization of the fiber, and to equalize some impairments in the channel such as the differential group delay, the mode-dependent loss, and the mode-dependent chromatic dispersion.

The three functional modules of the monitoring unit obtain the equalizer coefficient from the MIMO equalizer, i.e. the time domain coefficient of each sub-filter, and obtain the monitored values of a differential group delay (DMGD), a mode-dependent chromatic dispersion (MCD) and a mode-dependent loss (MDL).

The role of the addressing unit is to make the output sequences Y1, Y2,... ...YM with the input sequences X1, X2, ...., XM, in order to avoid the problem of switching between the output sequences of the blind equalizer, e.g., if a switching of a data flow occurs between the signal of mode 1 and that of mode 2, then the output sequences Y1, Y2 actually correspond to the data in mode 2 and mode 1, so that the monitored characteristic parameters relative to the mode 1 are actually relative to mode 2, and the characteristic parameters relative to the mode 2 are actually relative to mode 1.

Therefore, after the differential group delay (DMGD), mode-dependent chromatic dispersion (MCD) and mode-dependent loss (MDL) are obtained from the three functional modules of the monitoring unit, the characteristic parameters of the corresponding spatial channel are found according to the output sequence and the input sequence obtained from the addressing unit and fed back to the measurement display system or the system management unit.

The following illustrates the practical application of the method for monitoring characteristic parameters of the space division multiplexing system based on the strong coupling system of multi-core fiber and the space division multiplexing system based on partial coupling.

Based on the strong coupling multi-core fiber, the different inter-core coupling forms the supermode. The three polarization multiplexing inter-core signals are processed by the demultiplexer and the front end of the coherent receiver, and then the 6 data (two polarizations in each core) in the three-core fiber are processed equitably by MIMO at the digital signal processing (DSP), and the characteristic parameters are calculated. The 6 data in Core1, Core2, and Core3 are arranged in order of core1x, core1y, core2x, core2y, core3x, core3y, and the 6 data are X1,X2 ......X6, and the corresponding equalized outputs of the MIMO are Y1, Y2,...Y6. The time domain coefficient of the sub-filter of the MIMO is $W_{ij}(n)$, where $i, j \in \{1,2,3,4,5,6\}$ represents the coefficient of the sub-filter with the core j input and the core i output, $n \in \{1,2,....N\}$ is the identifier of the filter tap, N is the number of taps, and the operations to calculate the mode-dependent dispersion in a strong coupling three-core fiber are as follows:

the time domain coefficient $W_{ij}(n)$ of the sub-filter is Fourier transformed to obtain the frequency response $W_{ij}(f)$ of each sub-filter, and the overall frequency response of the entire MIMO equalizer is $W(f)$. The conjugate $W^*(f)=conj(W(f))$ of $W(f)$ is multiplied with $W(f)$ to obtain the matrix $T(f)=W^*(f)W(f)$; the first eigenvalue $\lambda_i(i = 1,2,...6)$ of $T(f)$ is obtained, and one of the modes j is chosen for reference, then the mode-dependent loss of each mode can be

$$MDL_{kj} = \left| 10\log_{10}(\frac{\lambda_k}{\lambda_j}) \right|, (k, j = 1,2,...6, j \neq k)$$

;

The calculation of the mode-dependent dispersion and the motoring of the differential group delay can use the following operations.

The inverse matrix $W^{-1}(f)$ of $W(f)$ is obtained. The partial differentiation on the $W(f)$ relative to frequency $f$ is performed to obtain a matrix $\dfrac{\partial W^{-1}(f)}{\partial f}$, the transpose of the matrix $\dfrac{\partial W^{-1}(f)}{\partial f}$ is obtained, and multiplied with the inverse matrix $W^{-1}(f)$, and multiplying by the imaginary part unit j to obtain the third matrix:

$$M(f) = \frac{j}{2\pi} W^{-1}(f) \left[ \frac{\partial W^{-1}(f)}{\partial f} \right]^H$$

; the second eigenvalue $\chi_i(i = 1,2,...6)$ of the third matrix at each frequency point $f$ is obtained, and the slope of the $\chi_i(f)$ to the frequency $f$ is obtained, the obtained mode-dependent dispersion (MCD) corresponding to core j can be

$$MCD_{kj} = \frac{\partial \chi_k}{\partial \omega} - \frac{\partial \chi_j}{\partial \omega} (k, j = 1, 2, ..6, k \neq j)$$

.

The differential group delay can be calculated by the eigenvalue $\chi_i(f)$ in two ways:

taking the eigenvalue at the zero frequency point directly can obtain differential group delay of the spatial channel k relative to the spatial channel j:

$$DMGD_{kj} = \chi_k\big|_{f=0} - \chi_j\big|_{f=0} (k, j = 1, 2, ...6, k \neq j)$$

;

or, the eigenvalues at each frequency point are summed to make the difference, the differential group delay between the modes is obtained as:

$$DMGD_{kj} = \sum_f \chi_k - \sum_f \chi_j (k, j = 1, 2, ...6, k \neq j)$$

;

It is determined, according to a correspondence relationship between input data and output data of the MIMO equalizer, the M input data corresponding to the characteristic parameters of the space division multiplexing fiber of the M output data, to obtain the characteristic parameters of the space division multiplexing fiber corresponding to M spatial channels. For example, the equalized recovered output sequences Y1, Y2, ...Y6, after the frequency offset and carrier phase recovery, become the 6 data streams $\hat{y}_1, \hat{y}_2....\hat{y}_M$, and the correlation between the 6 data streams $\hat{y}_1, \hat{y}_2....\hat{y}_M$ and the training sequences d1, d2, ..., dM is obtained. Assuming that the recovered signal at the receiver is $\hat{y}_i$, then the correlation coefficient, i.e., the maximum value in the $corr(\hat{y}_i d_j)(j = 1, 2, 3, ...6)$, is selected, which means that the i output data actually corresponds to the j input data, and the corresponding characteristic parameters are feedback to the measurement display system or to the system management unit.

For a partially coupling space division multiplexing system, in the case of three modes, assuming that the fiber channel supports three spatial modes LP01, LP11a and LP11b, and the modes LP01 and LP11 are weakly coupled, and LP11a and LP11b are strongly coupled, then two small MIMOs, i.e., a 2x2 MIMO to handle LP01 mode and a 4x4 MIMO to handle LP11a and LP11b modes, can be used in the equalization part of the MIMO. Similarly, the 4x4 MIMO can still be used to monitor the intra-die differential group delay, a chromatic dispersion, and a mode-dependent loss. The 2x2 MIMO estimates the polarization-dependent loss between the two polarizations of the LP01 mode, the polarization mode dispersion, and the residual chromatic dispersion parameters, which are calculated in a similar manner as described above and will not be repeated here.

In the embodiment of the present application, the time domain coefficient of each sub-filter of the MIMO equalizer are used to monitor the mode-dependent dispersion. Compared with the traditional method for measuring the average dispersion, the mode-dependent dispersion can be monitored in real time, which fits the characteristics of the inconsistent chromatic dispersion in each spatial channel of the space division multiplexing fiber and can accurately measure the dispersion between each mode.

The above methods are divided into operations only for the sake of clarity, which can be combined into one operation or split into multiple operations, as long as they include the same logical relationship, they are within the scope of the present application; adding insignificant modifications to the algorithm or process or introducing insignificant designs, but not changing the core design of the algorithm and process are within the scope of the present application.

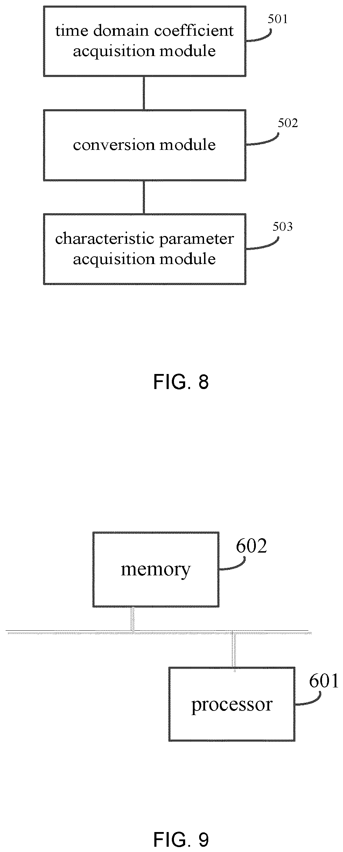

The fifth embodiment of the present application relates to a device for monitoring characteristic parameter of the space division multiplexing fiber, as shown in FIG. 8, including: a time domain coefficient acquisition module 501 for obtaining a time domain coefficient of each sub-filter of a MIMO equalizer; a conversion module 502 for obtaining a frequency response of each sub-filter according to the time domain coefficient of each sub-filter, to obtain a frequency response matrix of the MIMO equalizer; a characteristic parameter acquisition module 503 for obtaining characteristic parameters of the space division multiplexing fiber of each spatial channel according to the frequency response matrix.

In an embodiment, the characteristic parameter acquisition module 503 is further used to obtain the characteristic parameters of the space division multiplexing fiber of the M output data of the MIMO equalizer according to the frequency response matrix; determine, according to a correspondence relationship between input data and output data of the MIMO equalizer, the M input data corresponding to the characteristic parameters of the space division multiplexing fiber of the M output data, to obtain the characteristic parameters of the space division multiplexing fiber corresponding to M spatial channels.

In an embodiment, the characteristic parameters of the space division multiplexing fiber include: a mode-dependent loss. The characteristic parameter acquisition module 503 is further used to multiply the frequency response matrix with a conjugate term of the frequency response matrix to obtain a first matrix, and obtain a first eigenvalue sequence of the first matrix, wherein the first eigenvalue sequence comprises an eigenvalue corresponding to each spatial channel, and obtain a mode-dependent loss of a kth spatial channel relative to a jth spatial channel according to a ratio of an eigenvalue corresponding to the kth spatial channel to an eigenvalue corresponding to the jth spatial channel; wherein k and j are different natural numbers and their maximum values are not greater than a number of spatial channels.

In an embodiment, the space division multiplexing fiber characteristic parameter comprises: a mode-dependent loss. The characteristic parameter acquisition module 503 is further used to obtain the mode-dependent loss of the kth spatial channel relative to the jth spatial channel according to an equation;

$$MDI_{kj} = \left| 10\log_{10}(\frac{\lambda_k}{\lambda_j}) \right|, (k, j = 1,2,..M, j \neq k)$$

wherein $\lambda_k$ is the eigenvalue corresponding to the kth spatial channel, $\lambda_j$ is the eigenvalue corresponding to the jth spatial channel, and M is the number of spatial channels.

In an embodiment, the characteristic parameters of the space division multiplexing fiber include: a differential group delay and/or a mode-dependent dispersion. The characteristic parameter acquisition module 503 is further used to obtain an inverse matrix of the frequency response matrix, and perform partial differentiation on the inverse matrix relative to frequency to obtain a second matrix, and multiply a transpose matrix of the second matrix with the inverse matrix and then multiplying by an imaginary part unit to obtain a third matrix, and obtain a second eigenvalue sequence of the third matrix at each frequency point, wherein the second eigenvalue sequence includes an eigenvalue corresponding to each spatial channel at each frequency point; and obtain the characteristic parameters of the space division multiplexing fiber of each spatial channel according to the second eigenvalue sequence.

In an embodiment, the characteristic parameters of the space division multiplexing fiber include: a differential group delay. The characteristic parameter acquisition module 503 is further used to obtain the eigenvalue corresponding to the kth spatial channel at the zero frequency point and the eigenvalue corresponding to the jth spatial channel at the zero frequency point; and take a difference between the eigenvalue corresponding to the kth spatial channel at the zero frequency point and the eigenvalue corresponding to the jth spatial channel at the zero frequency point as the differential group delay of the kth spatial channel relative to the jth spatial channel, wherein k and j are different natural numbers and their maximum values are not greater than a number of spatial channels.

In an embodiment, the characteristic parameters of the space division multiplexing fiber include: a differential group delay. The characteristic parameter acquisition module 503 is further used to sum an eigenvalue of the kth spatial channel at each frequency point to obtain a first summed value, and sum an eigenvalue of the jth spatial channel at each frequency point to obtain a second summed value, and differentiate the first summed value and the second summed value to obtain a difference as the differential group delay of the kth spatial channel relative to the jth spatial channel, wherein k and j are different natural numbers and their maximum values are not greater than the number of spatial channels.

In an embodiment, the characteristic parameters of the space division multiplexing fiber include: a mode-dependent dispersion. The characteristic parameter acquisition module 503 is further used to perform partial differentiation on an eigenvalue of the kth spatial channel at each frequency point relative to an angular frequency to obtain a first partial differentiation, and perform partial differentiation on an eigenvalue of the jth spatial channel at the each frequency point relative to the angular frequency to obtain a second partial differentiation; and take a difference between the first partial differentiation and the second partial differentiation as the mode-dependent dispersion of the kth spatial channel relative to the jth spatial channel, wherein k and j are different natural numbers and their maximum values are not greater than the number of spatial channels. The present embodiment is a system embodiment corresponding to the embodiment of above method, and the present embodiment can be implemented with the embodiment of above method in conjunction with each other. The relevant technical details mentioned in the above method are still valid in the present embodiment, and will not be repeated here. Accordingly, the relevant technical details mentioned in the present embodiment can also be applied in the above embodiment of the method.

Each module in the embodiment is a logical module, and in practical applications, a logical unit can be a physical unit, or a part of a physical unit, or a combination of multiple physical units. In addition, in order to highlight the innovative part of the present application, the present embodiment does not introduce units that are less closely related to solving the technical problems presented in the present application, but this does not indicate that other units do not exist in the present embodiment.

A sixth embodiment of the present application relates to an electronic device, as shown in FIG. 9, the electronic device includes at least one processor 601 and a memory 602 communicated with the at least one processor. The memory stores instructions executable by the at least one processor, the instructions are executed by the at least one processor to enable the at least one processor to perform the method for monitoring characteristic parameters of the space division multiplexing fiber of the above embodiment.

The memory and the processor are connected by means of a bus, which may include any number of interconnected buses and bridges, the bus connects together various circuits of one or more processors and the memory. The bus may also connect together various other circuits such as peripherals, voltage regulators, and power management circuits, which are well known in the art and therefore will not be further described herein. The bus interface provides an interface between the bus and the transceiver. The transceiver may be a single element or a plurality of elements, such as a plurality of receivers and transmitters, providing units for communicating with various other devices on a transmission medium. Data processed by the processor is transmitted over the wireless medium via an antenna, and further, the antenna also receives the data and transmits it to the processor.

The processor is responsible for managing the bus and the usual processing, and may also provide various functions including timing, peripheral interfaces, voltage regulation, power management, and other control functions, and a memory may be used to store data used by the processor in performing operations.

A sixth embodiment of the present application relates to a computer readable storage medium storing a computer program that when executed by a processor causes the processor to perform the method described above.

That is, it is understood by those skilled in the art that all or some of the operations in the method of the above embodiments can be accomplished by instructing the relevant hardware by means of a program stored in a storage medium, the program includes a number of instructions to cause a device (which may be a microcontroller, chip, etc.) or processor (processor) to perform all or some of the operations of the method described in the various embodiments of the present application. The aforementioned storage media include: a USB flash drive, a mobile hard disk, a read-only memory (ROM), a random access memory (RAM), a disk or a CD-ROM, and other media that can store program code.

Those skilled in the art can understand that each of the above-mentioned embodiments is a specific embodiment for realizing the present application, while in practical application, various changes can be made to it in form and details without deviating from the scope of the present application.

## Claims

1. A method for monitoring characteristic parameters of a space division multiplexing fiber, **characterized by** comprising:

   obtaining a time domain coefficient of each sub-filter of a multi-input multi-output equalizer called a MIMO equalizer;
   obtaining a frequency response of each sub-filter according to the time domain coefficient of each sub-filter, to obtain a frequency response matrix of the MIMO equalizer; and
   obtaining characteristic parameters of the space division multiplexing fiber of each spatial channel according to the frequency response matrix.

2. The method for monitoring the characteristic parameters of the space division multiplexing fiber according to claim 1, wherein the obtaining characteristic parameters of the space division multiplexing fiber of each spatial channel according to the frequency response matrix comprises:

   obtaining the characteristic parameters of the space division multiplexing fiber of M output data of the MIMO equalizer according to the frequency response matrix; and
   determining, according to a correspondence relationship between input data and output data of the MIMO equalizer, M input data corresponding to the characteristic parameters of the space division multiplexing fiber of the M output data, to obtain the characteristic parameters of the space division multiplexing fiber corresponding to M spatial channels.

3. The method for monitoring the characteristic parameters of the space division multiplexing fiber according to claim 1 or claim 2, wherein the characteristic parameters of the space division multiplexing fiber comprise:

   a mode-dependent loss;
   the obtaining the characteristic parameters of the space division multiplexing fiber of each spatial channel according to the frequency response matrix comprises:

multiplying the frequency response matrix with a conjugate term of the frequency response matrix to obtain a first matrix;
obtaining a first eigenvalue sequence of the first matrix, wherein the first eigenvalue sequence comprises an eigenvalue corresponding to each spatial channel; and
obtaining a mode-dependent loss of a kth spatial channel relative to a jth spatial channel according to a ratio of an eigenvalue corresponding to the kth spatial channel to an eigenvalue corresponding to the jth spatial channel; wherein k and j are different natural numbers and their maximum values are not greater than a number of spatial channels.

4. The method for monitoring characteristic parameters of the space division multiplexing fiber according to claim 3, wherein the obtaining the mode-dependent loss of the kth spatial channel relative to the jth spatial channel according to the ratio of the eigenvalue corresponding to the kth spatial channel to the eigenvalue corresponding to the jth spatial channel comprises:

obtaining the mode-dependent loss of the kth spatial channel relative to the jth spatial channel according to an equation;

$$MDI_{kj} = \left| 10\log_{10}(\frac{\lambda_k}{\lambda_j}) \right|, (k, j = 1, 2, ..M, j \neq k)$$

wherein $\lambda_k$ is the eigenvalue corresponding to the kth spatial channel, $\lambda_j$ is the eigenvalue corresponding to the jth spatial channel, and M is the number of spatial channels.

5. The method for monitoring characteristic parameters of the space division multiplexing fiber according to claim 1, wherein the characteristic parameters comprise a differential group delay and/or a mode-dependent dispersion;
the obtaining the characteristic parameters of the space division multiplexing fiber of each spatial channel according to the frequency response matrix comprises:

obtaining an inverse matrix of the frequency response matrix;
performing partial differentiation on the inverse matrix relative to a frequency to obtain a second matrix;
multiplying a transpose matrix of the second matrix with the inverse matrix and then multiplying by an imaginary part unit to obtain a third matrix;
obtaining a second eigenvalue sequence of the third matrix at each frequency point, wherein the second eigenvalue sequence comprises an eigenvalue corresponding to each spatial channel at each frequency point; and
obtaining the characteristic parameters of the space division multiplexing fiber of each spatial channel according to the second eigenvalue sequence.

6. The method for monitoring characteristic parameters of the space division multiplexing fiber according to claim 5, wherein the characteristic parameters comprise the differential group delay;
the obtaining the characteristic parameters of the space division multiplexing fiber of each spatial channel according to the second eigenvalue sequence comprises:

obtaining an eigenvalue corresponding to the kth spatial channel at a zero frequency point and an eigenvalue corresponding to the jth spatial channel at the zero frequency point; and
taking a difference between the eigenvalue corresponding to the kth spatial channel at the zero frequency point and the eigenvalue corresponding to the jth spatial channel at the zero frequency point as the differential group delay of the kth spatial channel relative to the jth spatial channel, wherein k and j are different natural numbers and their maximum values are not greater than a number of spatial channels.

7. The method for monitoring characteristic parameters of the space division multiplexing fiber according to claim 5, wherein the characteristic parameters comprise the differential group delay; the obtaining characteristic parameters of the space division multiplexing fiber of each spatial channel according to the second eigenvalue sequence comprises:

summing an eigenvalue of the kth spatial channel at each frequency point to obtain a first summed value;
summing an eigenvalue of the jth spatial channel at each frequency point to obtain a second summed value; and

differentiating the first summed value and the second summed value to obtain a difference as the differential group delay of the kth spatial channel relative to the jth spatial channel, wherein k and j are different natural numbers and their maximum values are not greater than the number of spatial channels.

8. The method for monitoring characteristic parameters of the space division multiplexing fiber according to claim 5, wherein the characteristic parameters comprise the mode-dependent dispersion; the obtaining characteristic parameters of the space division multiplexing fiber of each spatial channel according to the second eigenvalue sequence comprises:

performing partial differentiation on an eigenvalue of the kth spatial channel at each frequency point relative to an angular frequency to obtain a first partial differentiation;
performing partial differentiation on an eigenvalue of the jth spatial channel at the each frequency point relative to the angular frequency to obtain a second partial differentiation; and
taking a difference between the first partial differentiation and the second partial differentiation as the mode-dependent dispersion of the kth spatial channel relative to the jth spatial channel, wherein k and j are different natural numbers and their maximum values are not greater than a number of spatial channels.

9. An apparatus for monitoring characteristic parameters of a space division multiplexing fiber, **characterized by** comprising:

a time domain coefficient acquisition module for obtaining a time domain coefficient of each sub-filter of a multi-input multi-output equalizer called a MIMO equalizer;
a conversion module for obtaining a frequency response of each sub-filter according to the time domain coefficient of each sub-filter, to obtain a frequency response matrix of the MIMO equalizer; and
a characteristic parameter acquisition module for obtaining characteristic parameters of the space division multiplexing fiber of each spatial channel according to the frequency response matrix.

10. An electronic device, **characterized by** comprising:

at least one processor; and
a memory communicated with the at least one processor; wherein
the memory stores instructions executable by the at least one processor, the instructions are executed by the at least one processor to enable the at least one processor to perform the method of monitoring characteristic parameters of the space division multiplexing fiber according to any one of claims 1 to 8.

11. A computer-readable storage medium, **characterized by** storing a computer program that when executed by a processor causes the processor to perform the method for monitoring characteristic parameters of the space division multiplexing fiber according to any one of claims 1 to 8.

starting

obtaining a time domain coefficient of each sub-filter of a multi-input multi-output equalizer called a MIMO equalizer    101

obtaining a frequency response of each sub-filter according to the time domain coefficient of each sub-filter, to obtain a frequency response matrix of the MIMO equalizer    102

obtaining characteristic parameters of the space division multiplexing fiber of each spatial channel according to the frequency response matrix    103

ending

FIG. 1

FIG. 2

```
                        ┌─────────────────┐
                        │    starting     │
                        └────────┬────────┘
                                 │
                                 ▼
      ┌──────────────────────────────────────────────────────┐
      │ obtaining the time domain coefficient of each sub-    │   201
      │ filter of the MIMO equalizer                          │
      └──────────────────────────┬───────────────────────────┘
                                 │
                                 ▼
      ┌──────────────────────────────────────────────────────┐
      │ obtaining the frequency response of each sub-filter   │   202
      │ according to the time domain coefficient of each      │
      │ sub-filter to obtain the frequency response matrix    │
      │ of the MIMO equalizer                                 │
      └──────────────────────────┬───────────────────────────┘
                                 │
                                 ▼
      ┌──────────────────────────────────────────────────────┐
      │ multiplying the frequency response matrix with a      │   203
      │ conjugate term of the frequency response matrix to    │
      │ obtain the first matrix                               │
      └──────────────────────────┬───────────────────────────┘
                                 │
                                 ▼
      ┌──────────────────────────────────────────────────────┐
      │ obtaining a first eigenvalue sequence of the first    │   204
      │ matrix, wherein the first eigenvalue sequence         │
      │ includes eigenvalues corresponding to each spatial    │
      │ channel                                               │
      └──────────────────────────┬───────────────────────────┘
                                 │
                                 ▼
      ┌──────────────────────────────────────────────────────┐
      │ obtaining characteristic parameters of the space      │   205
      │ division multiplexing fiber of M output data of the   │
      │ MIMO equalizer according to the first eigenvalue      │
      │ sequence, where the eigenvalues include the mode-     │
      │ dependent loss                                        │
      └──────────────────────────┬───────────────────────────┘
                                 │
                                 ▼
      ┌──────────────────────────────────────────────────────┐
      │ determining, according to a correspondence            │   206
      │ relationship between input data and output data of    │
      │ the MIMO equalizer, the M input data corresponding    │
      │ to the characteristic parameters of the space         │
      │ division multiplexing fiber of the M output data, to  │
      │ obtain the characteristic parameters of the space     │
      │ division multiplexing fiber corresponding to M        │
      │ spatial channels                                      │
      └──────────────────────────┬───────────────────────────┘
                                 │
                                 ▼
                        ┌─────────────────┐
                        │     ending      │
                        └─────────────────┘
```

FIG. 3

starting

obtaining the time domain coefficient of each sub-filter of the MIMO equalizer — 301

obtaining the frequency response of each sub-filter according to the time domain coefficient of each sub-filter to obtain the frequency response matrix of the MIMO equalizer — 302

obtaining an inverse matrix of the frequency response matrix; performing partial differentiation on the inverse matrix relative to frequency to obtain a second matrix; multiplying a transpose matrix of the second matrix with the inverse matrix and then multiplying by an imaginary part unit to obtain a third matrix — 303

obtaining a second eigenvalue sequence of the third matrix at each frequency point, wherein the second eigenvalue sequence comprises an eigenvalue corresponding to each spatial channel at each frequency point — 304

obtaining the characteristic parameters of the space division multiplexing fiber of each spatial channel according to the second eigenvalue sequence — 305

obtaining the mode-dependent loss of the space division multiplexing fiber — 306

determining, according to a correspondence relationship between input data and output data of the MIMO equalizer, the M input data corresponding to the characteristic parameters of the space division multiplexing fiber of the M output data, to obtain the characteristic parameters of the space division multiplexing fiber corresponding to M spatial channels — 307

ending

FIG. 4

```
                          ┌─────────────────────┐
                          │      starting       │
                          └─────────────────────┘
                                     │
                                     ▼
┌─────────────────────────────────────────────────────────────────┐
│  obtaining the time domain coefficient of each sub-filter of     │  401
│                    the MIMO equalizer                            │
└─────────────────────────────────────────────────────────────────┘
                                     │
                                     ▼
┌─────────────────────────────────────────────────────────────────┐
│  obtaining the frequency response of each sub-filter according   │  402
│  to the time domain coefficient of each sub-filter to obtain     │
│  the frequency response matrix of the MIMO equalizer             │
└─────────────────────────────────────────────────────────────────┘
                                     │
                                     ▼
┌─────────────────────────────────────────────────────────────────┐
│  obtaining the inverse matrix of the frequency response matrix;  │  403
│  performing partial differentiation on the inverse matrix        │
│  relative to the frequency to obtain a second matrix;            │
│  multiplying a transpose matrix of the second matrix with the    │
│  inverse matrix and then multiplying by an imaginary part        │
│  unit to obtain a third matrix                                   │
└─────────────────────────────────────────────────────────────────┘
                                     │
                                     ▼
┌─────────────────────────────────────────────────────────────────┐
│  obtaining a second eigenvalue sequence of the third matrix at   │  404
│  each frequency point, wherein the second eigenvalue sequence    │
│  comprises an eigenvalue corresponding to each spatial channel   │
│  at each frequency point                                         │
└─────────────────────────────────────────────────────────────────┘
                                     │
                                     ▼
┌─────────────────────────────────────────────────────────────────┐
│  performing partial differentiation on eigenvalues of the kth    │  405
│  and jth spatial channels at each frequency point relative to    │
│  the angular frequency, to obtain the first and second partial   │
│  differentiation                                                 │
└─────────────────────────────────────────────────────────────────┘
                                     │
                                     ▼
┌─────────────────────────────────────────────────────────────────┐
│  obtaining a difference between the first partial differentiation│  406
│  and the second partial differentiation to obtain the            │
│  mode-dependent dispersion                                       │
└─────────────────────────────────────────────────────────────────┘
                                     │
                                     ▼
┌─────────────────────────────────────────────────────────────────┐
│  obtaining the mode-dependent loss and the differential group    │  407
│  delay                                                           │
└─────────────────────────────────────────────────────────────────┘
                                     │
                                     ▼
┌─────────────────────────────────────────────────────────────────┐
│  determining, according to a correspondence relationship between │  408
│  input data and output data of the MIMO equalizer, the M input   │
│  data corresponding to the characteristic parameters of the      │
│  space division multiplexing fiber of the M output data, to      │
│  obtain the characteristic parameters of the space division      │
│  multiplexing fiber corresponding to M spatial channels          │
└─────────────────────────────────────────────────────────────────┘
                                     │
                                     ▼
                          ┌─────────────────────┐
                          │       ending        │
                          └─────────────────────┘
```

FIG. 5

$X_1$ $X_2$ $X_3$ $X_M$

. . .

MIMO equalizer

$Y_1$ . . . $Y_M$

addressing unit

. . .

$Y_1$ $Y_2$ $Y_3$ $Y_M$

coefficient of the MIMO equalizer

data rearrangement

monitoring unit

mode-dependent loss (MDL)

differential group delay (DMGD)

mode-dependent chromatic dispersion (MCD)

display or manage system

FIG. 6

FIG. 7

time domain coefficient
acquisition module — 501

conversion module — 502

characteristic parameter
acquisition module — 503

FIG. 8

memory — 602

processor — 601

FIG. 9

## INTERNATIONAL SEARCH REPORT

| International application No. |
| --- |
| **PCT/CN2021/108435** |

| | |
| --- | --- |
| **A.** | **CLASSIFICATION OF SUBJECT MATTER** |

H04B 10/079(2013.01)i

According to International Patent Classification (IPC) or to both national classification and IPC

| | |
| --- | --- |
| **B.** | **FIELDS SEARCHED** |

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 参数, 依赖性, 损耗, 色散, 少模光纤, 空分复用光纤, MIMO, 均衡器, 系数, 抽头, 子滤波器, 差分群时延, 差分群延时, 差分群延迟, 频率响应, 频响, 监测, coefficient, MDL, OPM, DMGD, DGD, monitoring, equalizer, CD, MCD, optical, parameter, dependencies, losses, chromatic dispersion, few mode fiber, space division multiplexing fibers, coefficient, tap, subfilter, differential, mode, group delay, frequency response

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | US 2019245617 A1 (INPHI CORPORATION) 08 August 2019 (2019-08-08) description paragraphs [0024]-[0046], [0067]-[0085], figures 2A, 2B, 6 | 1-11 |
| A | CN 106688199 A (XIEON NETWORKS S.A.R.L) 17 May 2017 (2017-05-17) entire document | 1-11 |
| A | CN 104348544 A (SHENZHEN ZHICHAO TECHNOLOGY DEVELOPMENT CO., LTD.) 11 February 2015 (2015-02-11) entire document | 1-11 |
| A | CN 109478932 A (FRAUNHOFER-GESELLSCHAFT ZUR FORDERUNG DER ANGEWANDTEN FORSCHUNG E.V.) 15 March 2019 (2019-03-15) entire document | 1-11 |
| A | HAUSKE, Fabian. N. et al. "Optical Performance Monitoring in Digital Coherent Receivers" *Journal of Lightwave Technology*, Vol. 27, No. 16, 15 August 2009 (2009-08-15), entire document | 1-11 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 October 2021** | **26 October 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/108435**

| Patent document cited in search report | | | Publication date (day/month/year) | Patent family member(s) | | | Publication date (day/month/year) |
|---|---|---|---|---|---|---|---|
| US | 2019245617 | A1 | 08 August 2019 | US | 9871583 | B1 | 16 January 2018 |
| | | | | US | 2018102839 | A1 | 12 April 2018 |
| | | | | US | 2020235808 | A1 | 23 July 2020 |
| | | | | US | 9094117 | B1 | 28 July 2015 |
| | | | | US | 9036751 | B1 | 19 May 2015 |
| | | | | US | 9077572 | B1 | 07 July 2015 |
| | | | | US | 9621382 | B1 | 11 April 2017 |
| CN | 106688199 | A | 17 May 2017 | US | 2017279531 | A1 | 28 September 2017 |
| | | | | EP | 2996264 | A1 | 16 March 2016 |
| | | | | WO | 2016037729 | A1 | 17 March 2016 |
| | | | | EP | 3192188 | A1 | 19 July 2017 |
| CN | 104348544 | A | 11 February 2015 | WO | 2015018133 | A1 | 12 February 2015 |
| | | | | US | 2015304025 | A1 | 22 October 2015 |
| CN | 109478932 | A | 15 March 2019 | US | 2019132048 | A1 | 02 May 2019 |
| | | | | EP | 3469742 | A1 | 17 April 2019 |
| | | | | WO | 2017211413 | A1 | 14 December 2017 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010848926